# EUROPÄISCHE PATENTANMELDUNG

(11) **EP 0 965 977 A2**
(43) Veröffentlichungstag der Anmeldung: **22.12.1999**
(21) Anmeldenummer: 99110446.4
(22) Anmeldetag: 29.05.1999
(51) Int. Cl.: G10K 11/172

(54) **Dämpfungselement**

(30) Priorität: 16.06.1998 DE 19826745
(71) Anmelder: Continental Aktiengesellschaft, 30165 Hannover (DE)
(72) Erfinder: Huinink, Heinrich, 30823 Garbsen (DE)

(57) **Zusammenfassung**

Element zur Dämpfung und/oder Absorption von Luftschall, insbesondere innerhalb von Hohlräumen in einem Fahrzeug, wobei das Dämpfungselement eine Vielzahl von diskreten Einzelkörpern enthält und die Einzelkörper jeweils mindestens einen Resonatorraum beinhalten, der mit einer Öffnung in der Oberfläche der Einzelkörper in Verbindung steht.

## Beschreibung

Die Erfindung betrifft ein Element zur Dämpfung von Luftschall durch Absorption, insbesondere innerhalb von Hohlräumen in einem Fahrzeug sowie die Verwendung eines solchen Dämpfungselementes und ein Material dafür.

Die Schallabstrahlung und Schallbelastung innerhalb und außerhalb eines Fahrzeuges, beispielsweise eines PKW, entsteht nicht nur durch Wind- und Motorgeräusche und durch Reifenabrollgeräusche, welche durch das Auftreffen des Profiles der Reifenlauffläche auf die Fahrbahnoberfläche erzeugt werden, sondern auch durch die (Resonanz-) Schwingungen von Karosserieteilen oder Luftmassen in von Karosserieteilen eingeschlossenen Hohlräumen.

Neben einer Reihe von passiven Maßnahmen zur Reduzierung der Schallbelastung der Umgebung, deren bekannteste wohl das Aufstellen von Lärmschutzwänden entlang viel befahrener Straßen innerhalb von Wohngebieten ist, sind auch aktive Maßnahmen üblich, die die Schallemission direkt am Fahrzeug reduzieren.

Zur Dämpfung der Schwingungen von Karosserieteilen oder des Luftschalls innerhalb von eingeschlossenen Hohlräumen an einem Fahrzeug sind im Stand der Technik Dämpfungsmaterialien bekannt, die in der Regel in Form von elastischen und ggf. gummierten Matten auf Karosserieteile aufgeklebt oder in Form von Füllschäumen in Hohlräume eingebracht werden.

Geeignete und wirksame elastische oder gummierten Matten weisen jedoch den Nachteil eines relativ hohen Eigengewichtes auf. Das Ausschäumen von Hohlräumen dagegen verteuert die Herstellung und behindert oft die nachträgliche Zugänglichkeit, etwa im Falle einer Reparatur.

Zur weiteren Minderung der Geräuschursachen in unmittelbarer Nähe des Entstehungsbereiches, beispielsweise zur Minderung der Reifenabrollgeräusche, die wesentlich durch die Gestaltung des Reifenprofils beeinflußt werden, sind bereits vielerlei Maßnahmen bekannt, die durch Änderungen der Pitchfolgen, d. h. der Profilteilungen, eine Lärmreduzierung im Hinblick auf die im hörbaren Bereich unangenehmen Frequenzen erzielten, indem eine Verteilung auf ein breiteres Frequenzband und eine Vermeidung der sogenannten 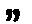 Peaks" erreicht wurde. Die Schwierigkeiten, die sich hierbei genauso wie bei dem Einsatz lärmmindernder Gummimischungen ergaben, liegen in dem besonderen Einfluß, den Laufstreifenprofil und auch Gummimischung auf die Fahreigenschaften des Fahrzeuges besitzen.

Weitere Entwicklungen gehen dahin, in den Radkästen der Kraftfahrzeuge schallabsorbierende Vorrichtungen anzubringen. Auch hier ist das zusätzliche Gewicht solcher Vorrichtungen nachteilig. Auch die oft mangelnde Einstellbarkeit solcher Vorrichtungen zur Dämpfung sowohl breitbandiger Frequenzbereiche als auch besonders störend empfundener einzelner Frequenzbereiche ist als nachteilig zu bemerken.

Eine weitere Schallursache sind die Schwingungen des Laufstreifens und der Seitenwände eines sich drehenden Fahrzeugreifens, die beim Verlassen der Radaufstandsfläche in ihren Eigenschwingungsformen ausschwingen. Auch die Eigenschwingungsformen des Reifengürtels machen sich hier verstärkt bemerkbar. Hier sind bereits Maßnahmen zur Versteifung der Seitenwände bzw. zur Verbindung beider Seitenwände innerhalb des Luftreifens mit Stegen bekannt.

All diese Schwingungen übertragen sich auch auf die Luftsäule im Reifeninneren, die diese wiederum zu einem nicht geringen Teil weiterleitet. Desweiteren werden in der Luftsäule die Ausbildung von stehenden Wellen und das Erreichen bestimmter Eigenfrequenzen möglich und verstärkt in die Reifenbauteile rückgekoppelt.

Bekannt sind hierzu schallabsorbierende Einbauten im Reifen, die auch die Dämpfung von Luftschall durch Absorption mit Hilfe von Resonatoren beinhalten. Die DE 4400912 A1 offenbart in diesem Zusammenhang einen innerhalb des Reifens auf die Felge aufgezogenen Schlauch, der mit schalldämmendem Material, wie Schaumstoff, Schaumgummi oder Watte, gefüllt ist. Der Schlauch ist dabei gemäß einer Ausführung mit Löchern versehen, die sich ggf. im Füllmaterial fortsetzen und als Resonatorräume ausgebildet sind. Nachteilig bei dieser Lösung ist die recht komplizierte Herstellung des gefüllten Schlauches und insbesondere der Resonatorräume, die erst nach Füllung des Schlauches einzeln und mit unterschiedlichen Abmessungen eingestochen werden müssen.

Für die Erfindung bestand also die Aufgabe, ein Dämpfungselement bereitzustellen, welches eine auch über ein breites Frequenzspektrum wirksame Dämpfung oder Absorption von Luftschall durch Resonatoren und durch Reflexion ermöglicht, welches auf einfachste Weise und in beliebiger Form und Größe herzustellen ist, und welches problemlos an vorgegebene Schallräume oder Aufnahmebehälter anpaßbar ist.

Gelöst wird diese Aufgabe durch die Merkmale des Hauptanspruchs. Vorteilhafte Ausbildungen sind durch die Unteransprüche erfaßt. Ebenfalls beansprucht ist die Verwendung eines erfindungsgemäßen Dämpfungselementes innerhalb von Fahrzeugreifen sowie ein zur Herstellung des erfindungsgemäßen Dämpfungselementes in besonderer Weise geeignetes Material.

Hierbei enthält das Dämpfungselement eine Vielzahl von diskreten Einzelkörpern, und die Einzelkörper beinhalten jeweils mindestens einen Resonatorraum, der mit einer Öffnung in der Oberfläche der Einzelkörper in Verbindung steht.

Ein solches Dämpfungselement mit einer Vielzahl als Mini-Resonatoren ausgebildeten diskreten Einzelkörpers zeigt in überraschender Weise Dämpfungseigenschaften, die bisher mit Dämpfungselementen aus Schaumstoft oder ähnlichen Materialien nicht annähernd erreicht werden können. Bei dem erfindungsgemäßen Dämpfungselement wird der gute Dämpfungseffekt bzw. die hohe Absorption dadurch erreicht, daß zum einen eine Dämpfung durch als Resonatoren ausgebildeten diskreten Einzelkörper stattfindet und zum anderen dadurch, daß durch die 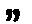 normale" Reflexion an den Oberflächen der diskreten Einzelkörper und des übrigen Materiales des Dämpfungselementes Laufwegdifferenzen bzw. Phasenunterschiede in den Wellenfronten erzeugt werden, wodurch eine Ausbildung von stehenden Wellen erschwert und zusätzlich auslöschende Interferenzen erzeugt werden.

Die diskreten Einzelkörper können dabei in ihren Resonatorabmessungen unterschiedlich ausgebildet sein, so daß innerhalb eines sehr breiten Frequenzbandes eine Dämpfung stattfindet. Je nach Anzahl solcher auf die einzelnen Frequenzen auszulegenden Mini-Resonatoren können auch sogenannte 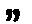 Peaks", d. h. Schallspitzen in einen bestimmten schmalen Frequenzbereich, die in aller Regel durch Eigenschwingungsmoden bestimmter Konstruktionsteile entstehen, wirksam gedämpft werden, ohne daß - wie bisher üblich - für solche Schallspitzen separates und extra angeordnetes Dämpfungsmaterial vorgesehen werden muß.

Vorteilhafterweise sind die diskreten Einzelkörper innerhalb des Dämpfungselementes regellos verteilt und zufällig angeordnet. Bei einer entsprechenden Vielzahl von Elementen stellt sich in überraschender Weise heraus, daß eine ausreichende Anzahl von Öffnungen in der Oberfläche der Einzelkörper auch mit der Oberfläche des Dämpfungselementes in Verbindung stehen, so daß ein Teil der einwirkenden Schallwellen direkt in die Resonatoröffnungen eintreten kann, während der übrige Teil zunächst teilweise reflektiert und dann durch das Material des Dämpfungselementes hindurchtreten und an die innerhalb des Dämpfungselementes gelegenen Resonatoröffnungen gelangen kann. Beide Effekte unterstützen sich gegenseitig in überaus starkem Maße bei der Dämpfung bzw. Absorption von Schall.

Vorteilhafterweise ist das Dämpfungselement in Form eines granulatartigen Schüttgutes ausgebildet, welches eine Vielzahl von diskreten Einzelkörpern enthält und vorzugsweise in ein Behältnis eingefüllt wird. Ein solches Behältnis kann entweder als Netz oder poröser Schlauch ausgebildet sein, welcher dann an entsprechenden Stellen, an denen Schall gedämpft werden soll, positioniert wird. Gleichermaßen kann das granulatartige Schüttgut auch als solches in Hohlräume in Fahrzeugen oder auch beispielsweise in hohle Schallschutzwände eingefüllt werden, so daß ein Luft- oder Hohlraum innerhalb eines schwingenden Körpers teilweise oder vollständig ausgefüllt wird.

Gerade bei der nachträglichen Dämpfung des Luftschalls, beispielsweise in Fahrzeughohlkörpern, ist ein solches Dämpfungselement ohne Probleme auf jegliche Behälterform anpaßbar, läßt sich ohne Schwierigkeiten einbauen und auch problemlos wieder entfernen, wenn ein Zugang zum Hohlkörper gewünscht wird.

Vorteilhafterweise ist das Dämpfungselement als ein gepreßter und/oder verklebter Formkörper ausgebildet, vorzugsweise als plattenförmiger Körper, welcher eine Vielzahl von als Mini-Resonatoren ausgebildeten diskreten Einzelkörpern enthält.

Ein solcher Formkörper, insbesondere ein platten- oder rondenförmig gepreßter Formkörper, läßt sich auf besonders einfache Weise in Karosserieteilen von Fahrzeugen anbringen bzw. ankleben, beispielsweise etwa im Bereich der Bodenbleche, der Türhohlräume oder auch am Dachblech und an der Motorhaube. Neben der Dämpfung des auf das Dämpfungselement wirkenden Luftschalls erreicht man hierdurch auch eine Änderung der Eigenfrequenzen der mit den Dämpfungselementen versehenen Bleche oder Teile, so daß auch hier ein doppelter Lärmminderungseffekt ausgenutzt wird. Durch die Vielzahl der hohlen Mini-Resonatoren im Dämpfungselement bzw. im Formkörper erreicht man zudem ein außerordentlich geringes Eigengewicht, was noch dadurch in vorteilhafter Weise weiter reduziert werden kann, daß die Einzelkörper aus einem Kunststoff niedrigen spezifischen Gewichtes bestehen.

Ebenfalls können solche Dämpfungselemente als geometrisch beliebige Formkörper ausgebildet werden, etwa als solche, die der üblichen Innenabdeckung von Radkästen entsprechen, so daß hier der durch das Reifenabrollen erzeugte Luftschall wirksam gedämpft werden kann.

Vorteilhafterweise ist der Resonatorraum der diskreten Einzelkörper als λ/4- oder Helmholtz-Resonator ausgebildet. Ein solcher an sich bekannter Helmholtz-Resonator weist einen Hohlraum auf, dessen Luftvolumen bei seiner Eigenfrequenz zu Schwingungen anregbar ist. Die Anregung erfolgt über seine Öffnung bzw. über einen Mündungshals, über den der Hohlraum des Helmholtz-Resonators mit seiner Umgebung in Verbindung steht. Weisen die im Umgebungsraum entstehenden und auf die Öffnung des Helmholtz-Resonators treffenden Schallwellen eine Frequenz auf, die mit der Eigenfrequenz des Helmholtz-Resonators übereinstimmt, so wird der Resonator durch die Schallwellen direkt angeregt. Eine Dämpfung der Schallwellen erfolgt dann durch Dissipation im Mündungshals des Resonators, wenn die Luft zwischen dem Umgebungsraum und dem Hohlraum des Resonators hin und her schwingt.

Die geometrische Gestalt des Resonators und insbesondere die seiner Öffnung sind dabei bestimmend für die Eigenfrequenz des Resonators und damit für die Dämpfung bestimmter Frequenzbereiche der auf den Resonator einwirkenden Schallwellen. Insofern läßt sich mit einer solchen Ausbildung auf besonders einfache Weise eine Einstellung der Dämpfungscharakteristik der Helmholtz-Resonatoren und damit des Dämpfungselementes auf bestimmte Frequenzbereiche bzw. bestimmte Anteile aus einem speziellen Frequenzband durchführen.

In einer weiteren vorteilhaften Ausbildung bestehen die diskreten Einzelkörper aus Gummi, was dazu führt, daß neben den bereits genannten Resonatordämpfungen auch eine weitere starke Dämpfung durch Reflektion der Schallwellen an den relativ weichen Innen- und Außenoberflächen des Resonators erreichbar ist.

Eine besonders geeignete und vorteilhafte Verwendung eines Dämpfungselementes zur Dämpfung und/oder Absorption von Luftschall innerhalb von Fahrzeugen besteht darin, daß das Dämpfungselement als ein aus diskreten Einzelkörpern bestehender Formring ausgebildet und innerhalb der Reifenkavität angeordnet ist.

Ein solcher Ring, der beispielsweise als geschlitzter Ring ausgebildet ist, wird dann bei der Reifenmontage in den Reifeninnenraum auf die Felge gelegt und dämpft im Betrieb die Schwingungen, die durch die schwingenden Seitenwände und den Laufstreifen eines Reifens auf die Luftsäule im Reifeninneren übertragen werden. Ein solcher geschlitzter Ringkörper kann auf einem gummierten Träger aufgebracht werden oder auch mit einer Rast- oder Schnappverbindung im Schlitzbereich versehen werden, damit während der Fahrt auftretende Fliehkräfte nicht zum Lösen des Formringes führen.

Ebenfalls ist es denkbar, den gesamten Innenraum des Reifens mit einem solchen Dämpfungselement auszufüllen, beispielsweise dann, wenn das Dämpfungselement als granulatartiges Schüttgut ausgebildet ist, welches während der Montage in den Reifeninnenraum eingefüllt werden kann.

Ein in besonderer Weise für ein Dämpfungselement geeignetes Dämpfungsmaterial besteht ausschließlich aus diskreten, regellos verteilten und zufällig angeordneten Einzelkörpern, wobei die Einzelkörper jeweils mindestens einen Resonatorraum beinhalten, der mit einer Öffnung in der Oberfläche der Einzelkörper in Verbindung steht.

Ein solches Material weist, da es ausschließlich aus hohlen Mini-Resonatoren besteht, ein ausgesprochen geringes Eigengewicht auf, und sichert durch die zufällig und regellos verteilte Anordnung der Einzelkörper gleichzeitig, daß eine hohe Anzahl von Resonatoröffnungen mit der Oberfläche des Dämpfungselementes in Verbindung steht.

Darüber hinaus wird durch die zufällige Anordnung der Einzelkörper eine stark zerklüftete und im Makrobereich ausgesprochen rauhe und stark dämpfende Oberfläche des Dämpfungselementes erzeugt. In den Fällen, in denen das Dämpfungsmaterial als gepreßter oder verklebter Formkörper vorliegt, läßt sich eine beliebige Form für ein Dämpfungselement durch Schneidvorgänge oder durch Abtragen von Material erreichen, ohne daß die Dämpfungseigenschaften als solche verschlechtert werden.

Darüber hinaus läßt sich ein solches Dämpfungsmaterial in besonders einfacher Weise auf eine verstärkte Dämpfung innerhalb bestimmter Frequenzbereiche ausbilden, indem nämlich unterschiedliche Anteile bzw. Anzahlen von geometrisch unterschiedlich ausgebildeten Miniresonatoren als diskrete Einzelkörper gemischt und/oder zusammengepreßt oder verklebt werden.

Die Herstellung von diskreten Einzelkörpern eines Dämpfungselementes kann beispielsweise durch einen Blasformprozeß durchgeführt werden, wobei blasformfähiges Platten- oder rondenförmiges Vormaterial durch Blasform in eine Vielzahl von konkaven Ausnehmungen in einem Gesenk eingeformt wird. Das Vormaterial erhält dadurch ebenfalls eine Vielzahl von konvexen und den Gesenkausnehmungen komplementären hohlen Ausbuchtungen und kann nach dem Formvorgang aus dem Gesenk entnommen und in Einzelkörper mit jeweils mindestens einer hohlen Ausbuchtung zertrennt werden.

Anhand eines Ausführungsbeispieles soll die Erfindung näher dargestellt werden. Es zeigen:
- Fig. 1: eine vergrößerte Darstellung verschiedener Formen von diskreten Einzelkörpern mit Resonatorräumen
- Fig. 2: eine vergrößerte Darstellung der Anordnung von diskreten Einzelkörpern innerhalb eines erfindungsgemäßen Dämpfungselementes
- Fig. 3: ein Dämpfungselement in Form eines in einem Fahrzeugreifen angeordneten Formringes.

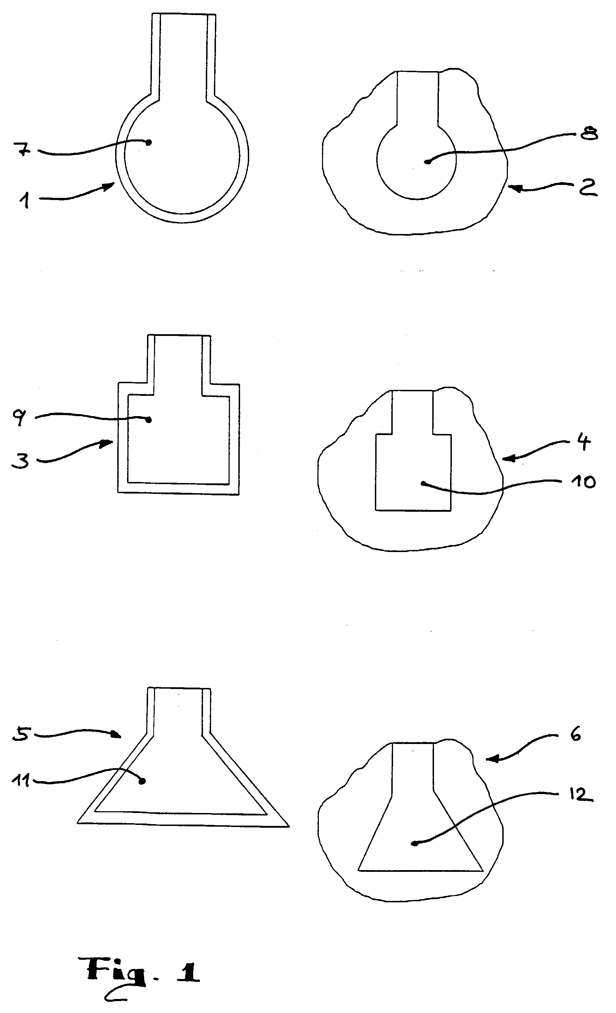

Die Figur 1 zeigt in einer vergrößerten Abbildung verschiedene Ausführungsformen von diskreten Einzelkörpern 1 bis 6, die in einem erfindungsgemäßen Dämpfungselement angeordnet sind.

Alle Einzelkörper weisen hierbei Resonatorräume 7 bis 12 auf, die mit einer Öffnung in der Oberfläche der Einzelkörper in Verbindung stehen. Die Resonatorräume weisen dabei unterschiedliche geometrische Formen und auch unterschiedliche Längen der jeweiligen zu den Eintrittsöffnungen führenden Hälse auf. Während die Resonatorräume 7 und 8 kugelförmig ausgebildet sind, besitzen die Resonatorräume 9 und 10 eine zylindrische oder rechteckige Form. Die Resonatorräume 11 und 12 sind kegelig oder pyramidenförmig ausgebildet. Darüber hinaus ist jede beliebige Form für Resonatorräume möglich, etwa auch eine Kugelhalbschale mit Öffnung in der begrenzenden Kreisfläche.

Die Ausbildung der Geometrie und der Abmessungen erfolgt dabei so, daß die Eigenfrequenzen der Luftvolumina in den Resonatoren den Frequenzen entsprechen, die aus einem gesamten Frequenzbereich des Luftschalls besonders gedämpft oder absorbiert werden sollen. Hierbei können unterschiedliche Resonatorgrößen und Geometrien zur Abdeckung eines möglichst großen Frequenzbereiches genutzt werden.

Die diskreten Einzelelemente unterscheiden sich in ihrer Formgebung dadurch, daß die Einzelelemente 1, 3 und 5 durch Formprozesse wie z. B. durch einen Blasformprozeß unter Nutzung eines Außenwerkzeugs hergestellt werden, wodurch die Außenkontur der einzelnen Elemente im wesentlichen der Kontur der Resonatorräume entspricht, während die Einzelelemente 2, 4 und 6 durch Innenformverfahren entweder innerhalb von Granulatmaterialien hergestellt werden oder in plattenförmigem Vollmaterial eingeformt werden, welches hinterher zerteilt bzw. gebrochen wird.

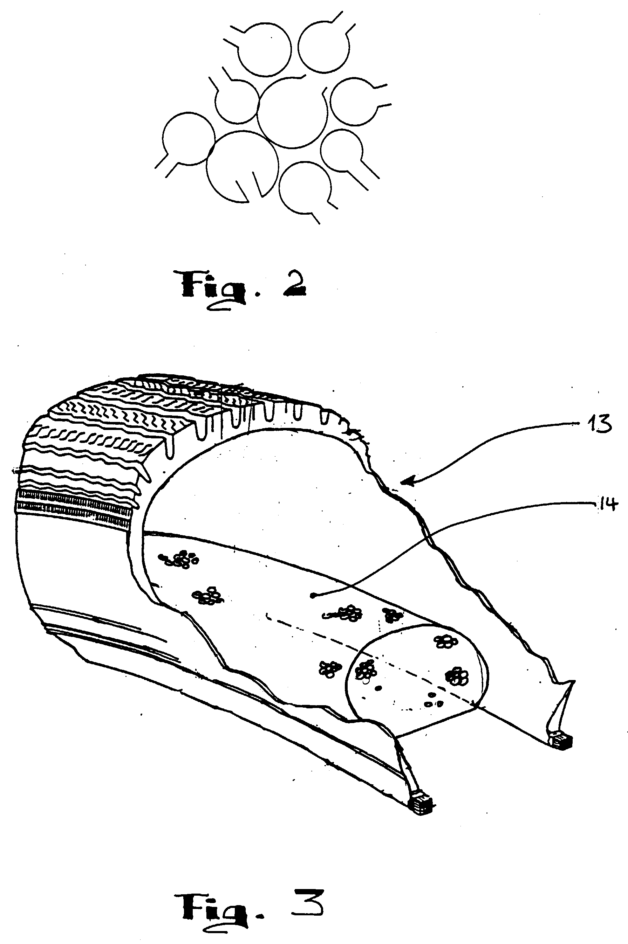

Die Figur 2 zeigt eine vergrößerte Abbildung der Anordnung von diskreten Einzelkörpern innerhalb eines Dämpfungselementes, wobei hier diskrete Einzelelemente in unterschiedlichen Größen verwendet werden, die in ihrer Form etwa dem in der Figur 1 dargestellten Einzelelement 1 entsprechen.

Die Anordnung der diskreten Einzelkörper ist hierbei zufällig, so daß sich eine regellose Verteilung der Einzelkörper und ihrer Öffnungen ergibt, wodurch innerhalb des Dämpfungselementes und auf dessen Oberfläche genug Resonatoröffnungen zur Verfügung stehen. Es handelt sich hierbei um ein Dämpfungsmaterial, was vollständig und ausschließlich aus diskreten Einzelkörpern besteht. Als Alternative hierzu können die diskreten Einzelkörper natürlich auch innerhalb einer Matrix aus Trägermaterial eingebettet werden.

Die Figur 3 zeigt ein Dämpfungselement zur Dämpfung und/oder Absorption von Luftschall innerhalb eines Fahrzeugreifens 13, der hier geschnitten und perspektivisch dargestellt ist. Das Dämpfungselement besteht hierbei aus einem Formring 14, der wiederum aus diskreten Einzelkörpern ausgebildet und innerhalb der Reifenkavität angeordnet ist.

### Bezugszeichenliste

### Dämpfungselement

- 1 - 6: diskreter Einzelkörper
- 7 - 12: Resonatorraum
- 13: Reifen
- 14: Formring

## Patentansprüche

1. Element zur Dämpfung von Luftschall durch Absorption, insbesondere innerhalb von Hohlräumen in einem Fahrzeug, wobei das Dämpfungselement eine Vielzahl von diskreten Einzelkörpern enthält und die Einzelkörper jeweils mindestens einen Resonatorraum beinhalten, der mit einer Öffnung in der Oberfläche der Einzelkörper in Verbindung steht.

2. Dämpfungselement nach Anspruch 1, wobei die diskreten Einzelkörper innerhalb des Dämpfungselementes regellos verteilt und zufällig angeordnet sind.

3. Dämpfungselement nach Anspruch 1 oder 2, ausgebildet in Form eines vorzugsweise in ein Behältnis eingefüllten granulatartigen Schüttgutes, welches eine Vielzahl von diskreten Einzelkörpern enthält.

4. Dämpfungselement nach Anspruch 1 oder 2, ausgebildet als ein gepreßter und/oder verklebter Formkörper, vorzugsweise als plattenförmiger Körper, welcher eine Vielzahl von diskreten Einzelkörpern enthält.

5. Dämpfungselement nach Anspruch 1 bis 4, dadurch gekennzeichnet, daß der Resonatorraum der diskreten Einzelkörper als λ/4 - oder Helmholtz-Resonator ausgebildet ist.

6. Dämpfungselement nach Anspruch 1 bis 5, dadurch gekennzeichnet, daß die Einzelkörper aus einem Kunststoff niedrigen spezifischen Gewichtes bestehen.

7. Dämpfungselement nach Anspruch 1 bis 5, dadurch gekennzeichnet, daß die Einzelkörper aus Gummi bestehen.

8. Verwendung eines Dämpfungselementes nach Anspruch 1 bis 7 zur Dämpfung und / oder Absorption von Luftschall innerhalb von Fahrzeugreifen, wobei das Dämpfungselement als ein aus diskreten Einzelkörpern bestehender Formring ausgebildet und innerhalb der Reifenkavität angeordnet ist.

9. Dämpfungsmaterial für ein Dämpfungselement nach Anspruch 1 bis 7, dadurch gekennzeichnet, daß das Dämpfungsmaterial ausschließlich aus diskreten, regellos verteilten und zufällig angeordneten Einzelkörpern besteht, wobei die Einzelkörper jeweils mindestens einen Resonatorraum beinhalten, der mit einer Öffnung in der Oberfläche der Einzelkörper in Verbindung steht.
